# EUROPEAN PATENT SPECIFICATION

(11) **EP 2 538 385 B1**
(45) Date of publication and mention of the grant of the patent: **18.07.2018**
(21) Application number: 10846067.6
(22) Date of filing: 30.07.2010
(51) Int. Cl.: G06Q 30/00, G06Q 50/00

(54) **DIGITAL SIGNAGE SYSTEM**
DIGITALES BESCHILDERUNGSSYSTEM
SYSTÈME DE SIGNALISATION NUMÉRIQUE

(30) Priority: 19.02.2010 JP 2010034278
(43) Date of publication of application: 26.12.2012
(73) Proprietor: Team Lab Inc., Tokyo 113-0033 (JP)
(72) Inventor: INOKO, Toshiyuki, Tokyo 113-0033 (JP)
(74) Representative: CSY St Albans
(86) International application number: PCT/JP2010/004835
(87) International publication number: WO 2011/101927

(56) References cited:
- JP-A- 7 210 608
- JP-A- 2005 010 608
- JP-A- 2007 122 563
- JP-A- 2008 090 745
- JP-A- 2009 237 696
- US-A1- 2003 101 105

## Description

The present invention relates to a digital signage system that can appropriately grasp the degree of customers' interest in garments and can increase willingness of the customers to buy the garments.

A merchandise management system of a garment is disclosed in Japanese Patent Laid-Open No. 2009-234,712. This system is for performing "careful information gathering with respect to customer trends in the case that some customers are interested in the garment a little bit and have the garment in hand briefly or do others".

Japanese Patent Laid-Open No. 2009-234,712 Official Gazette. The system of Japanese Patent Laid-Open No. 2009-234,712 can determine whether a customer picked up a garment or not. However, this system cannot measure depth of interest of the customer. In addition, this system cannot perform sales promotion to the customer.

US2003/101105 (VOCK CURTIS A) describes a system for generating a virtual clothing experience has a display for mounting with a wall, one or more digital cameras for capturing first images of the person standing in front of the display, an image processing module for synthesizing the first images and for generating a display image on the display that substantially appears, to the person, like a reflection of the person in a mirror positioned at the display. The cameras capture second images of a garment with the person; the module synthesizes the second images with the first images to generate the image that substantially appears, to the person, that the reflection wears the garment. A home version of the system may be formed with a home computer and a database storing garment images in cooperation with a manufacturer.

Therefore the present invention is intended to provide a digital signage system that can measure the depth of interest of the customer.

The present invention is also intended to provide a digital signage system that can perform sales promotion to customers.

The present invention is fundamentally based on knowledge that depth of interest of customers can be measured by summing the amount of time spent in the customers taking out a clothes hanger from a hanger rack.

In addition, the present invention is fundamentally based on knowledge that customer's willingness to buy can be increased by analyzing information of a garment that a customer took in hand and by displaying an image with respect to the garment on a monitor in the vicinity of the customer.

The first aspect of the present invention relates to a digital signage system 1 comprising a clothes hanger 12 having a sensor device 11, a computer 21, and a monitor.

The sensor device 11 comprises a sensor section 13, which performs measurement to judge whether the clothes hanger 12 is hung on a hanger rack or not, a judgment section 14, which is for judging whether it is hung on the hanger rack or not by receiving sensing information from the sensor section 13, an ID memory section 15, which memorizes an ID of the sensor device, and a transmitter-receiver section 16 of the clothes hanger, which transmits judgment information of the judgment section as well as the sensor device ID memorized in the ID memory section into the computer.

The computer 21 comprises a database 22, a transmitter-receiver 23 of the computer, a time update section 24, a clothing information arithmetic-logical section 25. In plural sensor devices, the database 22 memorizes an ID of each sensor device, information of garments hung on the clothes hanger provided with each sensor device, and an amount of time during which the clothes hanger provided with each sensor device are removed out from the hanger rack, by associating them with each other. The transmitter-receiver 23 of the computer receives the judgment information and the ID information that the transmitter-receiver 16 of the clothes hanger has transmitted. The time update section 24 performs process of updating, based on the ID information and the judgment information that the transmitter-receiver 23 of the computer have received, the amount of time, during which the clothes hanger associated with the ID information are removed out from the hanger rack, in the database. The clothing information arithmetic-logical section 25 is for reading out information with respect to the garments hung on the clothes hanger, which is memorized by associating with the ID information, from the database 22, and for transmitting it from the transmitter-receiver 23 of the computer.

The monitor receives the information with respect to the garments transmitted from the transmitter-receiver 23 of the computer and performs display of the garment.

The first preferred aspect of the present invention further comprises a photograph device photographing the area around the clothes hanger 12. In addition, the computer 21 further comprises an image processing section that receives information with respect to face of a customer, who picked up a clothes hanger, from the photograph device, and reads out information, which is memorized in conjunction with the ID information from the database 22, with respect to the garments hung on the clothes hanger, and then performs processing to generate an image of the customer wearing the clothes by image synthesis. Then, the computer 21 transmits the processed image from the transmitter-receiver 23 of the computer to the monitor.

The first preferred aspect of the present invention is the one that power supply of the sensor device 11 becomes ON state in the case that the clothes hanger 12 is removed out from the hanger rack.

The present invention can measure depth of interest of customers by summing the amount of time spent in the customers taking out a clothes hanger from hanger rack.

In addition, the present invention can increase customer' willingness to buy by analyzing clothing information that a customer picked up and by displaying an image of the garment on a monitor in the vicinity of the customer.

### [Brief description of the drawings]

Figure 1 is a schematic drawing of a system of the present invention.
Figure 2 is a schematic drawing to explain an embodiment of a clothes hanger of the present invention.

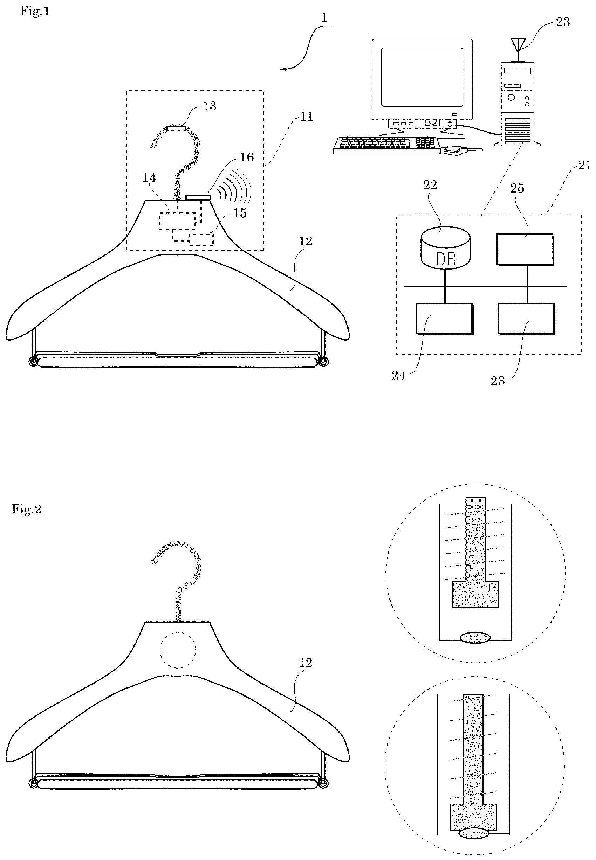

Figure 1 is a schematic drawing of a system of the present invention. As shown in Figure 1, the first aspect of the present invention relates to a digital signage system 1 comprising a clothes hanger 12 having a sensor device 11, a computer 21, and a monitor (not shown).

As shown in Figure 1, the sensor device 11 comprises a sensor section 13, a judgment section 14, an ID memory section 15, and a transmitter-receiver 16. The sensor section 13 performs measurement to judge whether a clothes hanger 12 is hung on a hanger rack or not. Examples of the sensor section 13 are a pressure sensor, a ZigBee, a RFID chip.

Figure 2 is a schematic drawing to explain an embodiment of a clothes hanger of the present invention. As shown in Figure 2, an example of the clothes hanger is the one that the clothes hanger comprises a core of the clothes hanger, a spring section attached to the core, and a power supply system that power supply is turned "ON" by a spring in a state that the clothes hanger is removed out from a hanger rack. In addition, mechanism of ON/OFF switch of the power supply of the present invention is not limited to the one having the spring. For example, the ON/OFF switch of the power supply may be controlled by using magnets and/or a pressure sensor. An embodiment is the one that the power supply is turned "ON" in the case that two magnets stick to each other, and that power supply is turned "OFF" by the two magnets being separated from each other by weight of the clothes hanger. For example, the pressure sensor does not hit the core in the case that the clothes hanger is hung on the hanger rack and the pressure sensor hits the core in the case that the clothes hanger is removed out from the hanger rack, and then the pressure sensor should issue an instruction that turns the power supply "ON" from the pressure sensor to the power supply in the latter case.

The judgment section 14 is a device to receive sensing information from the sensor section 13 and to judge whether it is hung on the hanger rack or not.

The ID memory section 15 is a device to memorize an ID of the sensor device.

The transmitter-receiver section 16 of the clothes hanger is a device to transmit judgment information of the judgment section as well as the ID of the sensor device, which is memorized in the ID memory section, to the computer.

A state that the clothes hanger 12 is hung on the hanger rack changes into a state that it is removed out from the hanger rack. Then, in the example of Figure 1, the sensor section 13, which is a pressure sensor, senses a pressure change and transmits pressure information to the judgment section 14. The judgment section 14 reads out a threshold value from the memory section, compares the transmitted pressure with the predetermined threshold, and then judges whether it is hung on the hanger rack or not. If the judgment section 14 judges that the clothes hanger is in a state that it has been removed out from the hanger rack, an ID of the sensor device (i.e., an ID of the garment that is hung on the hanger rack) is read out from the ID memory section 15, and judgment information of the judgment section (information that the clothes hanger is in a state that it has been removed out from the hanger rack) as well as the ID of the sensor device is transmitted to the computer.

In the example of Figure 2, in a state that the clothes hanger is hung on the hanger rack, as shown in the upper right diagram of Figure 2, a core of the clothes hanger is pulled upward and the core of the clothes hanger is in a state that it has been disconnected from a plate. On the other hand, in a state that the clothes hanger has been removed out from the hanger rack, as shown in the lower right diagram of Figure 2, the core of the clothes hanger is pushed towards the plate side by a spring. As a result, the core of the clothes hanger touches the plate. Then, a power supply system is turned "ON". In this way, a system comprising the core of the clothes hanger, the plate, and the spring functions as the sensor section 13. In addition, information that the power supply system has been turned "ON" can be used as judgment information of the judgment section 14. In other words, if the power supply system has been turned "ON", an ID of the sensor device (i.e., an ID of the garment that is hung on the hanger rack) is read out from the ID memory section 15 and it as well as the ID of the sensor device are transmitted to the computer.

The computer 21 comprises a database 22, a transmitter-receiver section 23 of the computer, a time update section 24, and a clothing information arithmetic-logical section 25.

With respect to plural sensor devices, the database 22 memorizes an ID of each sensor device, information with respect to a garment that is hung on the clothes hanger provided with each sensor device, and the amount of time during which the clothes hanger provided with each sensor device is removed out from the hanger rack, by associating them with each other.

The ID of the sensor device may be the same as an ID of the garment hung on the clothes hanger. Examples of information with respect to a garment are one or more than one of a manufacturing company of the garment, a brand of the garment, a producer of the garment, a producer of suit or dress material, a price of the garment, a manufacturer, a pictorial image, and an animated image. An example of the pictorial image is a pictorial image indicating a state that a model wears the garment identified by the ID. In addition, it may be a pictorial image indicating a state that the garment is really worn, to use for image synthesis as mentioned later. The animated image may be a PR animated image of the garment.

The transmitter-receiver section 23 of the computer is a device to receive judgment information and ID information which the transmitter-receiver section 16 of the clothes hanger has transmitted.

The time update section 24 is a device to perform processing to update the amount of time during which the clothes hanger with respect to ID information, which is memorized in the database on the basis of judgment information and ID information which the transmitter-receiver section 23 of the computer has received, is removed out from the hanger rack. In other words, the time update section 24 measures an amount of time during which a clothing article identified by a certain ID is removed out from the hanger rack. Then, the amount of time memorized in the database so far is read out, and the read-out time and the measured time are summed up. In addition, the summed up time is inputted into the database and the amount of time during which the clothes hanger with respect to the ID information is removed out from the hanger rack is updated.

Because the system of the present invention comprises the time update section 24, total amount of time during which a certain garment is taken by the hands of customers can be appropriately grasped. In other words, not only whether it has been really sold or not but also how much interest the garment has gained can be appropriately grasped.

The clothing information arithmetic-logical section 25, for example, read out information, which is memorized in connection with the ID information from the database 22, with respect to the garment hung on the clothes hanger, to transmit information of a pictorial image and/or an animated image to be displayed on the monitor. In addition, the clothing information arithmetic-logical section 25 makes transmission of the read-out information from the transmitter-receiver section 23 of the computer.

The first preferred aspect of the present invention further comprises a photograph device that photographs the area around the clothes hanger 12. In addition, the photograph device extracts face information of a customer. The method to extract the face information is well known. In other words, because a customer and scenery are different from each other in pictorial image information, only the image of the customer can be extracted by grasping change of the pictorial image. In addition, the computer 21 receives information with respect to the face of the customer, who has picked up a clothes hanger, from the photograph device. Then the computer 21 reads out information, which is memorized in connection with the ID information from the database 22, with respect to the garment hung on the clothes hanger. This information with respect to the garment is a pictorial image indicating a state that the garment has been really worn to use for image synthesis. Then, the pictorial image that the customer wears the garment is synthesized by combining the read out pictorial image indicating the state of the customer wearing the garment with the face of the customer. Then the computer 21 transmits the processed image from the transmitter-receiver section 23 of the computer to the monitor.

The monitor receives the information, which has been transmitted from the transmitter-receiver 23 of the computer, with respect to the garment, and performs display with respect to the garment. The monitor comprises a receiving section such as an antenna not shown here. In addition, the receiving section receives predetermined information and synthesize a pictorial image and shows it on the monitor. In this way, the information with respect to the garment is displayed on the monitor and can attract interest of the customer.

### [Industrial applicability]

The present invention can be preferably used in the field(s) of advertising industry and/or device business with respect to advertisement.

1 Digital signage system
11 Sensor device
12 Clothes hanger
13 Sensor section
14 Judgment section
15 ID memory section
16 Transmitter-receiver section of clothes hanger
21 Computer
22 Database
23 Transmitter-receiver section of computer
24 Time update section
25 Clothing information arithmetic-logical section

## Claims

1. A digital signage system (1) comprising a clothes hanger (12) comprising a hook and a core and having a sensor device (11), a computer (21), and a monitor, wherein the sensor device (11) comprises:
a power supply system;
a sensor section (13) performing measurement to judge whether the clothes hanger (12) is hung on a hanger rack or not;
a judgment section (14) to receive sensing information from the sensor section (13) and to judge whether it is hung on the hanger rack or not;
an ID memory section (15) memorizing an ID of the sensor device, and
a transmitter-receiver section (16) of the clothes hanger which transmits judgment information of the judgment section as well as the ID of the sensor device, which is memorized in the ID memory section, to the computer;
the computer (21) comprises:
a database (22) memorizing, with respect to plural sensor devices, an ID of each sensor device, information with respect to a garment hung on the hanger rack provided with each sensor device, and an amount of time during which the clothes hanger is removed out from the hanger rack, by associating them with each other;
a transmitter-receiver section (23) of the computer, which receives the judgment information and the ID information that have been transmitted by the transmitter-receiver section (16) of the clothes hanger;
a time update section (24) that performs processing to update an amount of time, during which the clothes hanger with respect to the ID information is removed out from the hanger rack, in the database, on the basis of the judgment information and the ID information, which have been received by the transmitter-receiver section (23) of the computer; and
a clothing information arithmetic-logical section (25) to read out information, which is memorized in conjunction with the ID information, with respect to the garment hung on the hanger rack, from the database (22), and to make transmission from the transmitter-receiver section (23) of the computer;
the monitor receives the information, which has been transmitted by the transmitter-receiver (23) of the computer, with respect to the garment, and perform display with respect to the garment;
**characterized in that**:
the hook is connected to the core with a spring section, and the core comprises a plate, such that when the clothes hanger is hung on a hanger rack the base of the hook moves away from the plate and when the clothes hanger is no longer hung on a hanger rack the base of the hook touches the plate, to provide the sensor section (13), and wherein when the base of the hook is in contact with the plate the power supply system is turned ON, to provide the judgment section (14), such that the sensor device (11) makes power supply be in ON state in the event that the clothes hanger (12) has been removed out from the hanger rack; and
the digital signage system (1) further comprises a photograph device that photographs the area around the clothes hanger (12), the computer (21) further comprising an image processing section, which receives information with respect to face of the customer who has picked up the clothes hanger from the photograph device, read out information, which is memorized in conjunction with the ID information, with respect to the garment hung on the clothes hanger, from the database (22), and performs processing to synthesize a pictorial image of the customer wearing the garment, and the computer (21) transmits the processed-image from the transmitter-receiver section (23) of the computer to the monitor.

## Patentansprüche

1. Digital Signage-System (1), umfassend einen Kleiderbügel (12), umfassend einen Haken und einen Kern und mit einer Sensorvorrichtung (11), einem Computer (21) und einem Monitor, wobei die Sensorvorrichtung (11) folgendes umfasst:
ein Stromversorgungssystem;
einen Sensorabschnitt (13), der eine Messung durchführt, um zu entscheiden, ob der Kleiderbügel (12) auf einer Kleiderstange aufgehängt ist oder nicht;
einen Entscheidungsabschnitt (14) für den Empfang von Messinformationen von dem Sensorabschnitt (13) und um zu entscheiden, ob er auf der Kleiderstange aufgehängt ist oder nicht;
einen ID-Speicherabschnitt (15), der eine ID der Sensorvorrichtung speichert; und
einen Sender-Empfänger-Abschnitt (16) des Kleiderbügels, der Entscheidungsinformationen des Entscheidungsabschnitts sowie die ID der Sensorvorrichtung, die in dem ID-Speicherabschnitt gespeichert ist, zu dem Computer überträgt; wobei der Computer (21) folgendes umfasst:
eine Datenbank (22), die in Bezug auf mehrere Sensorvorrichtungen eine ID jeder Sensorvorrichtung speichert, Informationen in Bezug auf ein Kleidungsstück, das auf der Kleiderstange aufgehängt ist, die mit jeder Sensorvorrichtung bereitgestellt werden, und einer Zeitdauer, während welcher der Kleiderbügel von der Kleiderstange entfernt ist, indem diese Informationen untereinander zugeordnet werden;
einen Sender-Empfänger-Abschnitt (23) des Computers, der die Entscheidungsinformationen und die ID-Informationen empfängt, die durch den Sender-Empfänger-Abschnitt (16) des Kleiderbügels übertragen worden sind;
einen Zeitaktualisierungsabschnitt (24), der eine Verarbeitung zur Aktualisierung der Zeitdauer, während welcher der Kleiderbügel in Bezug auf die ID-Informationen von der Kleiderstange entfernt ist, in der Datenbank ausführt auf der Basis der Entscheidungsinformationen und der ID-Informationen, die von dem einen Sender-Empfänger-Abschnitt (23) des Computers empfangen worden sind; und
einen Bekleidungsinformationen-Arithmetik-Logik-Abschnitt (25) zum Auslesen von Informationen, die in Verbindung mit den ID-Informationen in Bezug auf das auf der Kleiderstange aufgehängte Kleidungsstück gespeichert werden, aus der Datenbank (22), und um eine Übertragung von dem Sender-Empfänger-Abschnitt (23) des Computers vorzunehmen;
wobei der Monitor die in Bezug auf das Kleidungsstück von dem Sender-Empfänger (23) des Computers übertragenen Informationen empfängt und diese in Bezug auf das Kleidungsstück anzeigt;
**dadurch gekennzeichnet, dass**:
der Haken über einen Federabschnitt mit dem Kern verbunden ist, und wobei der Kern eine Platte umfasst, so dass, wenn der Kleiderbügel auf eine Kleiderstange gehängt wird, sich die Basis des Hakens von der Platte weg bewegt, und wobei die Basis des Hakens die Platte berührt, wenn der Kleiderbügel nicht mehr auf einer Kleiderstange hängt, um den Sensorabschnitt (13) bereitzustellen, und wobei, wenn sich die Basis des Hakens in Kontakt mit der Platte befindet, das Stromversorgungssystem eingeschaltet ist, um den Entscheidungsabschnitt (14) bereitzustellen, so dass die Sensorvorrichtung (11) die Stromversorgung in den eingeschalteten Zustand versetzt, wenn der Kleiderbügel (12) von der Kleiderstange entfernt worden ist; und wobei das Digital Signage-System (1) ferner eine Fotovorrichtung umfasst, die den Bereich um den Kleiderbügel (12) fotografiert, wobei der Computer (21) ferner einen Bildverarbeitungsabschnitt umfasst, der in Bezug auf das Gesicht des Kunden, der den Kleiderbügel von der Kleiderbügel heruntergenommen hat, von der Fotovorrichtung speichert, Informationen aus der Datenbank (22) ausliest, die in Verbindung mit den ID-Informationen gespeichert werden, in Bezug auf das auf dem Kleiderbügel aufgehängte Kleidungsstück, und eine Verarbeitung ausführt, um ein piktografisches Bild des Kunden, der das Kleidungsstück trägt, zu synthetisieren, und wobei der Computer (21) das verarbeitete Bild von dem Sender-Empfänger (23) des Computers zu dem Monitor überträgt.

## Revendications

1. Système de signalisation numérique (1) comprenant un cintre (12) comprenant un crochet et un centre et ayant un dispositif capteur (11), un ordinateur (21) et un moniteur, le dispositif capteur (11) comprenant :
un système d'alimentation ;
une section capteur (13) effectuant une mesure pour déterminer si le cintre (12) est accroché ou non à un support à cintres ;
une section de détermination (14) pour recevoir des informations de détection de la section capteur (13) et pour déterminer s'il est accroché ou non au support à cintres ;
une section mémoire d'ID (15) stockant une ID du dispositif capteur, et
une section émettrice-réceptrice (16) du cintre qui transmet à l'ordinateur les informations de détermination de la section de détermination ainsi que l'ID du dispositif capteur, qui est stockée dans la section mémoire d'ID ;
l'ordinateur (21) comprenant :
une base de données (22) stockant, pour plusieurs dispositifs capteurs, une ID de chaque dispositif capteur, des informations relatives à un vêtement accroché au support à cintres équipé de dispositif capteur, et une durée pendant laquelle le cintre est retiré du support à cintres, en les associant les unes aux autres ;
une section émettrice-réceptrice (23) de l'ordinateur, qui reçoit les informations de détermination et les informations d'ID qui ont été transmises par la section émettrice-réceptrice (16) du cintre ;
une section de mise à jour de durée (24) qui effectue un traitement pour mettre à jour une durée, pendant laquelle le cintre associé à l'information d'ID est retiré du support à cintres, dans la base de données, en fonction de l'information de détermination et de l'information d'ID, qui ont été reçues par la section émettrice-réceptrice (23) de l'ordinateur ; et
une section arithmétique-logique d'information sur les vêtements (25) pour lire l'information, qui est stockée conjointement avec l'information d'ID, pour le vêtement accroché au support à cintres, à partir de la base de données (22), et pour effectuer la transmission à partir de la section émettrice-réceptrice (23) de l'ordinateur ;
le moniteur recevant les informations qui ont été transmises par l'émetteur-récepteur (23) de l'ordinateur, pour le vêtement, et effectue l'affichage pour le vêtement ;
**caractérisé en ce que** :
le crochet est relié au centre avec une section ressort, et le centre comprend une plaque, de sorte que lorsque le cintre est accroché à un support à cintres, la base du crochet s'éloigne de la plaque et lorsque le cintre n'est plus accroché à un support à cintres, la base du crochet touche la plaque, pour fournir la section capteur (13), et lorsque la base du crochet est en contact avec la plaque, le système d'alimentation électrique est mis sous tension, pour fournir la section de détermination (14), de sorte que le dispositif de capteur (11) amène l'alimentation électrique à l'état ON lorsque le cintre (12) a été retiré du support à cintres ; et
le système de signalisation numérique (1) comprenant en outre un dispositif photographique qui photographie la zone autour du cintre (12), l'ordinateur (21) comprenant en outre une section de traitement d'image, qui reçoit des informations concernant le visage du client qui a pris le cintre du dispositif photographique, lit les informations, qui sont stockées conjointement avec les informations d'ID, pour le vêtement accroché au cintre, à partir de la base de données (22), et effectue un traitement pour synthétiser une image picturale du client portant le vêtement, et l'ordinateur (21) transmet la page traitée de la section émettrice-réceptrice (23) de l'ordinateur au moniteur.
